# EUROPEAN PATENT SPECIFICATION

(11) **EP 3 178 769 B1**
(45) Date of publication and mention of the grant of the patent: **15.01.2020**
(21) Application number: 15198164.4
(22) Date of filing: 07.12.2015
(51) Int. Cl.: B66B 5/00

(54) **INSPECTION OF CABLE MOUNTED ELEVATOR DEVICES**
INSPEKTION VON KABELMONTIERTEN AUFZUGSVORRICHTUNGEN
INSPECTION DE DISPOSITIFS D'ASCENSEUR MONTÉS SUR UN CÂBLE

(43) Date of publication of application: 14.06.2017
(73) Proprietor: Alimak Group Management AB, 111 51 Stockholm (SE)
(72) Inventor: Slett, Andrew M Van, Hartland, 53029 (US)
(74) Representative: ZBM Patents - Zea, Barlocci & Markvardsen

(56) References cited:
- JP-A- 2003 065 721
- JP-A- 2005 047 647
- JP-A- 2013 228 260
- US-A- 4 659 195
- Avanti: "Traction Hoist and Fall Arrest Device Manual Original", , 1 September 2012 (2012-09-01), pages 9-23, XP055476337, Retrieved from the Internet: URL:http://www.avanti-online.com/admin/pub lic/download.aspx?file=/Files/Files/Downlo ads/Manuals/Shark/45540047-M508ASL508_600_ EN-1st-R3.pdf [retrieved on 2018-05-17]

## Description

### TECHNICAL FIELD

The present disclosure relates generally to inspection methods of cable mounted devices related to elevators, in particular of safety devices and traction systems. The present disclosure is also related to such cable mounted devices for elevators and wind turbine towers comprising elevators. More particularly, it relates to improved safety devices and traction systems for an elevator such as e.g. of a service elevator of a wind turbine tower and an improved visual non-contact inspection method for such traction and safety devices.

### BACKGROUND

The use of wind turbines for converting wind energy to electrical energy is becoming more and more popular as societies move towards alternative energy sources. Wind turbines of current design are typically mounted atop towers so as to place the turbines in optimal locations for receiving wind energy. Indeed, such towers are now constructed to heights of 200 feet or more. Maintenance of the wind turbine which is mounted at the top of such a tower typically requires that a worker ascend the interior of the tower structure using an elevator system which comprises a "service lift" or "service elevator" which is elevated within the tower via a wire rope or cable. However, to use such service lifts, certain traction and safety mechanisms need to be in place and are mandated by safety regulations and standards, depending on the country or state where the wind turbine is installed. Further, certain inspections of such service lifts and their component parts are also mandated, all of which are required for increasing the safety for tower maintenance personnel.

The service elevators may incorporate some form of traction device mounted on or attached to the elevator. The traction device may comprise a housing including a traction mechanism, e.g. a motor driven traction sheave. The motor typically may be an electrical motor, although in principle other motors could be used. A hoisting cable of the service elevator passes through an entry hole in the housing of the traction device, around the traction sheave and exits the housing at an exit hole at an opposite end of the entry hole.

Service elevators further may incorporate an electromagnetic brake. In addition to this brake, a "secondary safety device" or "fall arrest secondary safety device" may be mounted on or attached to the elevator. Such a secondary safety device serves as a back-up for the main electromagnetic brake and may typically incorporate some form of sensing mechanism sensing the elevator's speed. The secondary safety device may automatically block the elevator and inhibit any further movement if the elevator moves too fast, i.e. when the elevator might be falling.

A hoisting cable of the service elevator or a dedicated safety cable may pass through an entry hole in the safety device, through the interior of the safety device and exit the safety device through an exit hole at an opposite end. Some form of clamping mechanism for clamping the hoisting cable or the safety cable when an unsafe condition exists may be incorporated in the safety device.

The European EC-Directive 2006/42/EC and the Safety Code for Elevators and Escalators in the United States, ASME A 17.1-2013 (the "Code" - Bi-national standard with CSA 844-13), where adopted, regulate the design, the inspection frequency and inspection criteria of service lifts. The European EC-Directive 2006/42/EC and the manufacturer instructions mandates that the traction and safety devices must be checked and serviced regularly by an authorized company. The Safety Code for Elevators and Escalators in the United States mandates that, if a safety component is replaced or serviced, then a full load drop test is required. The impact this imparts on a wind turbine tower owner is as follows:
- component replacement cost;
- turbine "down time" - the service lift is locked out until an inspector can perform the drop test; and
- the owner of the service lift is also required to pay for the following line items:
   ∘ permit for the replacement and servicing of the service lift safety item;
   ∘ cost for the state to witness the drop test;
   ∘ cost for a service provider to perform the full load drop test; and
   ∘ cost of the additional turbine down time for the testing and preparation;

Further, the lead time for an inspector to be on site can be 3+ weeks on occasions. In order to more thoroughly inspect all internal mechanisms of such a fall arrest secondary safety device, the operation of the wind turbine needs to be interrupted, and the fall arrest device is to be taken to a workshop, where it is disassembled. After re-assembling it is reinstalled in the wind turbine.

JP 2005 047647 discloses the use of an endoscope for visual inspection of a traction mechanism of an elevator.

There is also impact on the work of maintenance personnel. That is, when the lift is down, the maintenance personnel is required to climb the tower via a ladder, which imparts ergonomic impact and safety risks that the service lift was purchased to mitigate in the first place. In all, the tangible costs of these items range between 25 - 50% of the purchase price of the service lift.

In the experience of the inventor, the overall impact to the wind industry has been a steady decrease in the quantity of service. Relative to service elevator fall-arrest and secondary safety devices in particular (in the present disclosure, these devices will be collectively referred to as, "fall-arrest secondary safety devices" or "secondary safety device") field technicians perform either annual or semi-annual inspections on the fall-arrest secondary safety devices, per local regulations. The same applies to traction systems involved in hoisting (elevating) and lowering the elevator.

Fall-arrest secondary safety devices, when fitted to an appropriate cable, can be of the type that comprises internal rollers and a jaw-type unit which closes onto the safety wire rope, which could be the main hoisting cable or a separate safety cable. These devices may comprise a centrifugal overspeed detector. Such an overspeed detector may comprise a roller coupled with movable parts that are forced outwardly as the roller rotates when it is driven by the wire rope passing along it. A pressure roller ensures the contact between the wire rope and the roller of the centrifugal overspeed detector. If the wire rope passes through the safety device too rapidly, the brake trips and the jaws clamp onto the wire, thus blocking the safety device on the wire rope.

The current procedure requires a technician to perform a slack line test, in which they pull the wire rope or cable that the fall-arrest secondary safety device rides on rapidly through the fall-arrest secondary safety devices. The centrifugal brake must be seen rotating in a sight window and the clamp mechanism must activate and hold onto the cable after the brake has tripped. The fall-arrest secondary safety devices are also manually tripped, and the service lift's electromagnetic brake is released, as a test to ensure that the fall-arrest secondary safety devices holds the weight of the service lift as well as the person in it.

In some locations in the United States, full load drop tests are required at installation as well as at five year intervals. If any of the above tests fail, the fall-arrest secondary safety device is to be replaced.

In the experience of this inventor, there is a need for an improved procedure for the inspection of the internal rollers and jaw mechanism of such fall-arrest secondary safety devices. Similarly, there is a need for an improved procedure for the inspection of the internal mechanism of elevator traction devices.

Service elevators and related traction system and safety devices are not only used in wind turbine towers, but instead may be found in many different sites and structures. The related safety and inspection procedures and requirements can be the same or similar to the ones described with reference to wind turbine towers. The problems and needs experienced in those other sites and industries may thus be similar as well.

### SUMMARY

The present disclosure comprises inspection methods using endoscopes to inspect the visual wear and/or damage to the internal components of cable mounted devices, such as traction system and fall-arrest secondary safety devices.

An endoscope as used throughout the present disclosure may be regarded as any instrument comprising an insertion tube suitable for insertion into an interior of a body or component, and a viewing system at or near a distal end of the insertion tube. Optionally, an illumination system may be incorporated at or near the distal end of the insertion tube as well.

The insertion tube extends from a proximal end (e.g. at a handle) to a distal end which is to be introduced into the interior of a body (in the case of the present disclosure, a cable mounted device). The illumination system may receive and transmit light coming from a light source mounted at or connected at a proximal end of the insertion tube e.g. at a handle and the light may be transmitted using an optical fiber. The viewing system may comprise a video or photo camera. Images obtained or captured by the viewing system may be transmitted to a display which an operator may use to determine the status of the safety device.

In some endoscopes, the handle of an insertion tube may include a control mechanism to steer the distal end of the insertion tube.

Endoscopes are typically known from medical imaging in which they are used for viewing and collecting information of an interior organ of the human body. These same endoscopes have been given a completely different use within the context of the present disclosure. Endoscopes known from the medical field may be used in examples of the present invention. In other examples, also endoscopes particularly developed for the new application explained in the present disclosure may be used.

Cable mounted devices for an elevator as used throughout the present disclosure may be regarded as any device mounted on a cable related to an elevator. For the mounting on a cable, such a device may typically include an entry hole for the cable, and an exit hole for the cable. As explained herein, such entry holes and exit holes may provide access to an endoscope.

A cable as used throughout the present disclosure may be regarded any elongate element formed of bonded, twisted or braided wires of any material and covers e.g. ropes, and wire ropes.

The words "elevators" and "lifts" are used interchangeably throughout the present disclosure.

The value in using a visual inspection method using an endoscope is that the traction system and fall-arrest secondary safety devices are not being opened or manipulated, which will not impart any additional risks that require mitigation. If the units required being opened and inspected in the field, a risk analysis would show that new failure modes may be introduced that can lead to product failure. These risks, in the view of this inventor, outweigh the benefit of the currently-used complete "tear down" inspection method.

More specifically, in a first aspect, a method for inspecting a safety device mounted on a service elevator according to claim 1 is provided.

This could be done either via the cable entry and/or cable exit when the cable has been removed beforehand.

In an example, it is proposed to use an 8.4 mm endoscope to perform the inspection of the rollers and the jaws of the safety devices, without opening the safety device.

In some examples which are not part of the invention, the cable actuation mechanism may be a traction mechanism comprising a traction sheave, and wherein the method comprises inspecting the traction sheave for unusual wear and/or an unusual shape. In these examples, a traction device (or "traction hoist") may be inspected in the same manner. Also in this case, both the cable entry hole or the cable exit hole may be used. Alternatively, a dedicated additional inspection hole may be provided for allowing inspection using an endoscope.

In any of these examples which are not all part of the invention, the cable actuation mechanism may comprise guiding and/or pressure rollers.

In a further aspect which is not part of the invention, a cable mounted device of an elevator is provided, which comprises a housing, an entry hole for a cable, an exit hole for the cable, and a cable actuation mechanism inside the housing, and an additional inspection hole in the housing for entry of an insertion tube of an endoscope. The additional inspection hole may be provided in an upper part of the housing for entry from above. Particularly, parts of the cable actuation mechanism in an upper part of the housing may be inspected in this manner. The additional inspection hole could also be provided in a lower part of the housing, e.g. for visual inspection of parts of the cable actuation mechanism in a lower part of the housing.

The additional inspection hole may in some examples comprise a lid or cover to close the hole when it is not used for inspection.

In yet a further aspect which is not part of the invention, a wind turbine including a service elevator and a cable mounted device according to any of the examples disclosed herein is provided. And in yet a further aspect which is not part of the invention, the use of an endoscope for visual inspection of a cable mounted device of an elevator is provided.

The foregoing and other features of the method and cable mounted devices of the present disclosure will be apparent from the detailed description that follows.

### BRIEF DESCRIPTION OF THE DRAWINGS

FIG. 1 is a perspective view of a fall-arrest secondary safety device of the type that would be viewed internally using an example of a method of inspection.
FIG. 2a - 2c show longitudinal cross-sectional views and a cross-sectional top view of a fall arrest device which may the same or similar to the fall-arrest device shown in figure 1.
FIG. 3 is a photo showing new rollers in a fall-arrest secondary safety device as viewed using an example of a method of inspecting using an endoscope.
FIG. 4 is a photo showing new jaws in the fall-arrest secondary safety device shown in FIG. 3 as viewed using an example of a method of inspecting using an endoscope.
FIG. 5 is a photo showing the used rollers of a fall-arrest secondary safety device as viewed using an example of a method of inspecting using an endoscope after 52 hours of use of the rollers.
FIG. 6 is a photo showing the used rollers of another fall-arrest secondary safety device as viewed using an example of a method inspecting using an endoscope, also after 52 hours of use of the rollers.
FIG. 7 is a photo showing a missing roller and a cable cut into the roller shaft of another fall-arrest secondary safety device as viewed using an example of a method of inspecting using an endoscope.
FIG. 8 is a photo showing the stuck roller of another fall-arrest secondary safety device, resulting in a cable cutting into a drive roller, as viewed using an example of a method of inspecting using an endoscope; and
FIG. 9 schematically shows a cross-sectional view of a traction mechanism of a service elevator.

### DETAILED DESCRIPTION OF EXAMPLES

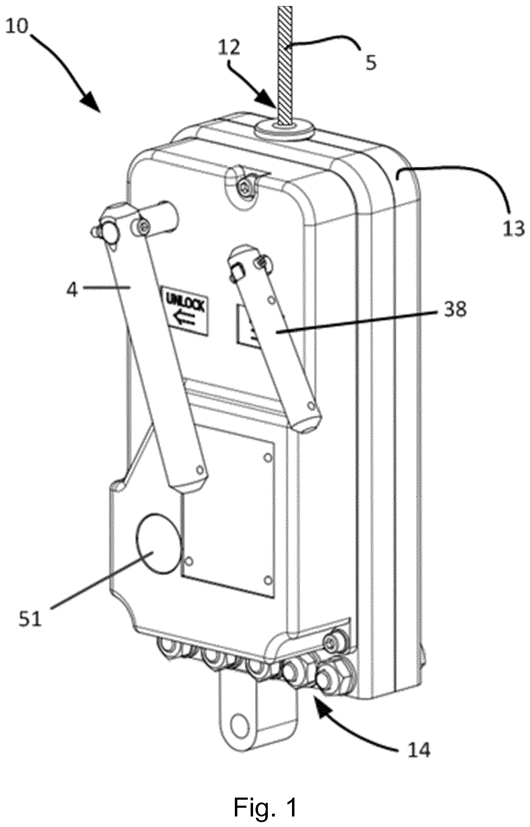

As a preliminary matter, it is to be understood that examples of the methods of the present disclosure can be used with a fall-arrest secondary safety device, an example of which is illustrated in FIG. 1. This fall-arrest secondary safety device is an example of a cable mounted device of an elevator. The fall arrest device 10 of figure 1 is mounted on wire rope 5 and comprises a housing 13 having an upper wire rope entry 12, an unlocking lever 4 and a sight window 51. The housing further comprises a lower wire rope exit 14. Also indicated in figure 1 is an emergency locking lever 38.

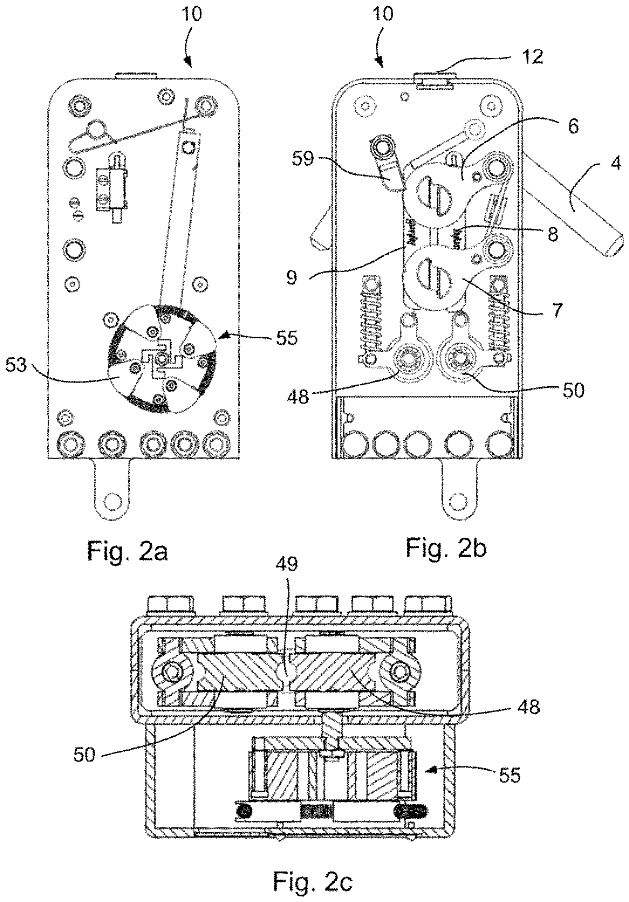

Figures 2a - 2c schematically illustrate cross-sectional views of a safety device 10 similar to the one shown in figure 1. In the interior of the housing of the safety device 10, at least one safety mechanism is provided. The safety mechanism acts on the cable, and therefore may be subject to wear. In particular, the parts and components that are substantially constantly in contact with the cable may be subject to wear.

Figure 2b illustrates an entry hole 12 for a cable. The cable passes in between the clamping jaws of upper clamp 6 and lower clamp 7. In normal operation, the clamping jaws are "open", and there is substantially no contact between the cable and the clamping jaws. The jaws are in normal operation prevented from closing by blocking element 59. If in operation, an overspeed of the cable is detected, the overspeed detector trips which moves the blocking element and allows the jaws to close. The elevator is thus prevented from falling.

The overspeed detection and trip mechanism may comprise a driven roller 48 which is in contact with the cable. As the cable moves, the roller 48 is driven and rotates. The driven roller 48 is operatively coupled with the centrifugal overspeed detector 55 shown in figure 2a. Both the driven roller 48 and the overspeed detector 55 may be mounted on the same axle of shaft.

The overspeed detector 55 may comprise a plurality of weights 53, which are configured to move outwards as the detector rotates due to the centrifugal forces acting on them. If the driven roller rotates too fast (i.e. this may indicate an unsafe condition caused by e.g. a traction hoist malfunction and/or electromagnetic brake malfunction), the weights 53 move outwardly to such an extent that the detector trips. When the detector trips, as explained before, the clamping jaws close down and the elevator comes to a halt.

In order to ensure that the driven roller 48 is in fact driven by the movement of the cable, a pressure roller 50 may force both of them in contact with each other. Both the pressure roller 50 and the driven roller 48 are constantly in contact with the tensioned cable. The contact between the cable and the rollers may result in wear of the grooves along the perimeters of the rollers. Instead of a rounded shape (such as shown in figure 2c), a crescent shape of the grooves may result.

In accordance with standard inspection procedures, the procedure comprises the step of removing the cable from the attachment point below the service lift thereby creating slack in the system. This cable is then slowly moved through the fall-arrest secondary safety device while the centrifugal unit of the fall-arrest secondary safety device is visually inspected through the sight window 51 (shown in figure 1). If the centrifugal unit is not spinning, the unit is rejected and must be replaced. The cable is then rapidly moved through the fall-arrest secondary safety device. The clamping mechanism of the fall-arrest secondary safety device should be triggered and engage on the wire. If this does not occur, the unit is rejected and must be replaced.

In accordance with an example, the method comprises the step of removing the cable from the fall-arrest secondary safety device. Using the upper wire rope entry 12, the camera and light portion of an 8.4 mm endoscope may be introduced to visualize the wear condition of the jaws 8, 9. The jaws 8, 9 are viewed for any signs of unusual wear. The entire length of each jaw 8, 9 may be viewed. If the shape is not found to be correct, the unit is rejected and must be replaced.

Moving downwardly, the camera and light portion of an 8.4 mm endoscope may be pushed past the jaws 6, 7 for viewing of the rollers 48, 50. The user may inspect whether both rollers 48, 50 are present, and check whether the shape of the grooves accommodating the cable is crescent rather than round, and check whether wear is even on both surfaces. If the shape is not found to be correct, or if any unusual wear is detected, the unit is rejected and must be replaced.

After the inspection in accordance with examples of the disclosure, the wire rope may be replaced or repositioned in the fall-arrest secondary safety device. The service lift may be raised (about 1 meter) above the deck and the fall-arrest secondary safety device may be manually tripped. An audible snapping sound should be heard. The electromagnetic brake in the service lift is then released. The lift shall not move downward. If the lift moves downward, the fall-arrest secondary safety device is rejected and must be replaced.

Lastly, the cable may be re-secured below the lift per the manufacturer's manual.

In the above described example, an 8.4 mm endoscope was used. The term 8.4 mm herein refers to the diameter of the insertion tube. It will be clear that the type of endoscope and its size may be chosen in accordance with the safety device to be inspected.

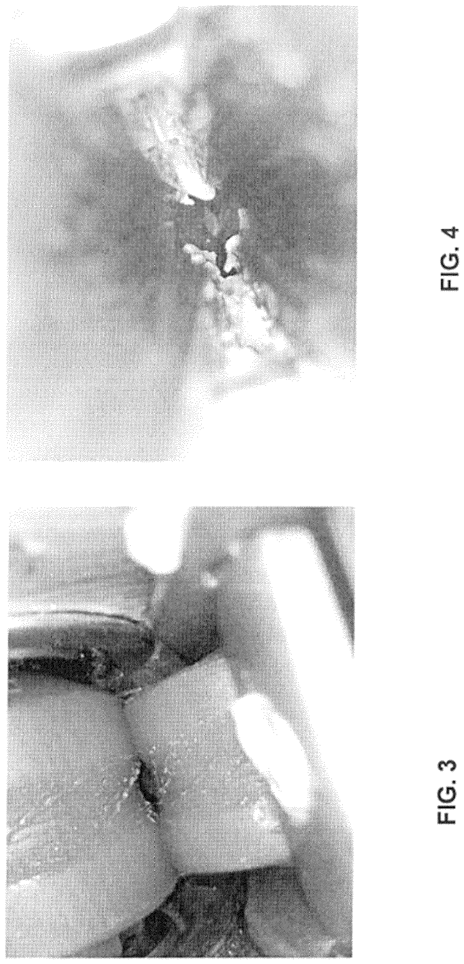

Figures 3 - 8 show images that may be obtained when using an endoscope for inspection of a fall arrest device as illustrated in figures 1 and 2. Figures 3 and 4 show photos of newly installed pressure and driven rollers and new clamping jaws of a fall arrest system. In figure 3, the round shape of a portion of the groove accommodating the cable along the perimeter of the rollers may be seen.

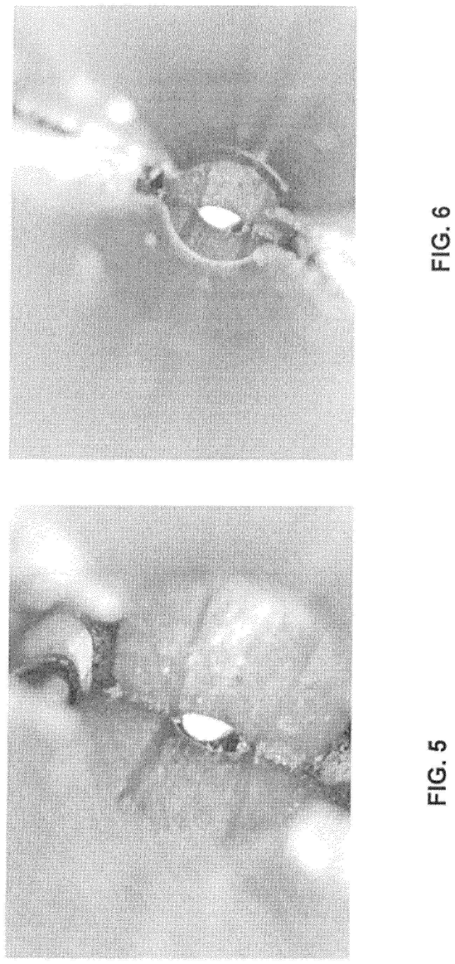

Figures 5 and 6 are photos showing the rollers of different fall-arrest secondary safety device as viewed using an example of a method of inspecting using an endoscope after 52 hours of use of the rollers.

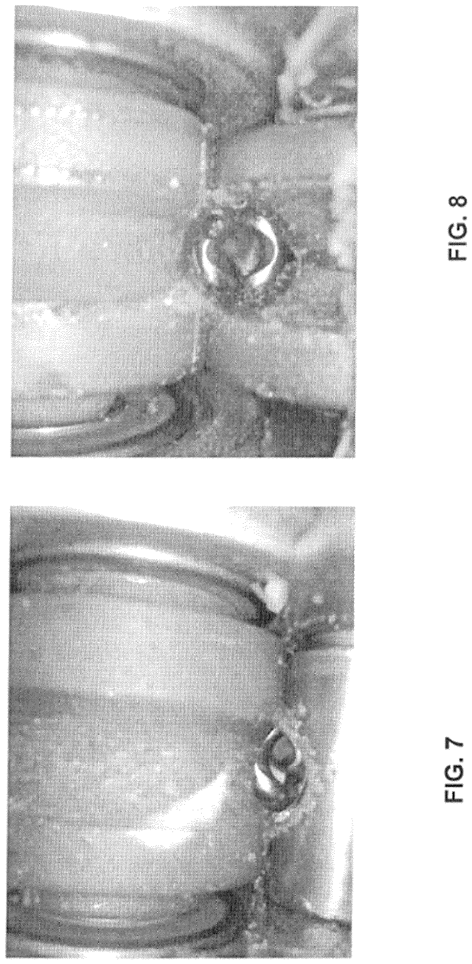

Figures 7 and 8 are photos showing examples of wear: in the case of figure 7, one of the rollers is missing and as a result, the cable has cut into the axle on which the roller is mounted. In the case of the fall arrest device of figure 8, one of the rollers got stuck, resulting in the cable cutting into a drive roller.

Notably all images shown in figures 3 - 8 were obtained with examples of methods of inspecting according to the present disclosure. The images clearly illustrate the possibility and viability of inspections being carried out with endoscopes.

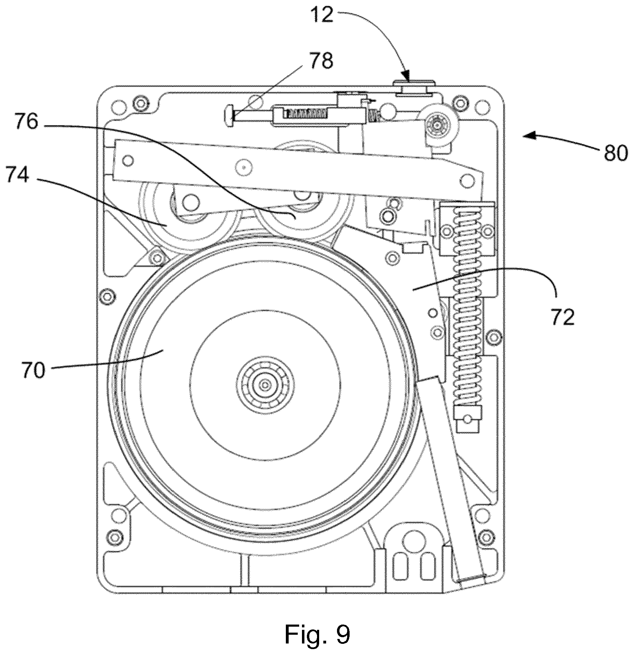

Figure 9 schematically illustrates a cross-sectional view of a traction hoist 80 for a service elevator. Reference sign 12 indicates an entry hole for a cable.

The cable passes completely around the traction sheave 70 and then exits the traction hoist at the bottom of the housing. The cable guide 72 and pressure rollers 74 and 76 ensure that the cable maintains contact with the traction sheave along the entire perimeter of the traction sheave 70. Also shown in figure 9 is an overload detector 78.

An electric motor may drive the traction sheave 70 through a gear system involving one or more stages. As the sheave is rotated, it "climbs" or descends the cable. The elevator thus moves upwards or downwards.

The rollers 74, 76 and sheave 70 are substantially constantly in contact with the tensioned cable. The grooves of the rollers and sheave 70 may thus show similar symptoms of wear as previously commented with respect to the fall arrest secondary safety device.

As was previously explained, an endoscope may be used for inspecting the mechanism that acts on the cable. In particular, the rollers 74 and 76 may be checked for a crescent shape of the groove guiding the cable, or any other symptom of unusual wear. Also the traction sheave 70 may check for such symptoms. Also the exit hole for the cable could be used to allow access to an endoscope.

In further examples of the present disclosure, a traction device (e.g. traction hoist) or a safety device according to any of the examples described herein may be provided with an inspection hole (different from entry and exit holes of the wire it is mounted on) for insertion of a tube of the endoscope. In examples, the service hole may be provided e.g. in an upper surface of the housing and may be covered with a suitable lid when functioning normally.

During an inspection, the lid may be moved and an insertion tube may enter though such an inspection hole. E.g. from the top surface of the housing of a fall arrest secondary safety device, relatively easy access may be available to the clamping jaws.

Additionally, or alternatively, such an inspection hole may be provided at a bottom surface of the housing of the fall-arrest secondary safety device. From such an inspection hole, relatively easy access may be available for checking a centrifugal roller arrangement.

The size of a dedicated inspection hole may be adapted to the endoscope that is foreseen to be used for inspection.

The scope of the present disclosure should not be limited by particular examples, but should be determined only by the claims that follow.

## Claims

1. Method for inspecting a safety device (10) mounted on a service elevator, the safety device comprising a housing (13), an entry hole (12) for a cable (5), and an exit hole (14) for the cable, and a safety mechanism inside the housing,
the safety mechanism being configured to prevent the cable (5) which passes through the safety device (10) from moving when an unsafe condition exists and wherein
the safety mechanism comprises
a first clamp (6) and a second clamp (7) for clamping the cable (5) in between the first and the second clamps (6, 7) and
a centrifugal detection mechanism, the centrifugal detection mechanism comprising a driven roller (48), and
the method comprising
inspecting the safety mechanism using an endoscope by inserting an insertion tube of the endoscope through the entry hole for the cable or through the exit hole for the cable, and
inspecting the first and the second clamps (6, 7) for unusual wear, and
inspecting the driven roller (48) for a crescent shape of an external groove of the driven roller by pushing a distal end of the insertion tube through the clamps (6, 7) of the clamping mechanism, wherein the cable (5) is removed from the housing (13) prior to inserting the insertion tube.

2. Method for inspecting according to claim 1, wherein the centrifugal detection mechanism comprises a pressure roller (50) for forcing the cable (5) and the driven roller (48) into contact with each other, and the method comprising inspecting the pressure roller (50) for a crescent shape of an external grove of the pressure roller (50).

3. Method according to claim 2, wherein inspecting the pressure roller (50) comprises pushing a distal end of the insertion tube through the clamps (6, 7) of the clamping mechanism.

## Patentansprüche

1. Verfahren zur Prüfung von einer auf einem Serviceaufzug montierten Sicherheitsvorrichtung (10), wobei die Sicherheitsvorrichtung ein Gehäuse (13), eine Eingangsöffnung (12) für ein Kabel (5) und eine Ausgangsöffnung (14) für das Kabel und einen Sicherheitsmechanismus innerhalb des Gehäuses umfasst,
wobei der Sicherheitsmechanismus konfiguriert ist, um zu verhindern, dass das Kabel (5), welches die Sicherheitsvorrichtung (10) durchgeht, sich bewegt, wenn ein unsicherer Zustand gegeben ist und wobei
der Sicherheitsmechanismus folgendes umfasst
eine erste Klemmvorrichtung (6) und eine zweite Klemmvorrichtung (7) zum Klemmen des Kabels (5) zwischen der ersten und der zweiten Klemmvorrichtung (6, 7) und
einen zentrifugalen Erkennungsmechanismus, wobei der zentrifugale Erkennungsmechanismus eine angetriebene Walze (48) umfasst, und
wobei das Verfahren folgendes umfasst
das Prüfen des Sicherheitsmechanismus mittels eines Endoskops, indem ein Einführrohr des Endoskops durch die Eingangsöffnung für das Kabel oder durch die Ausgangsöffnung für das Kabel eingeführt wird, und
das Prüfen von der ersten und der zweiten Klemmvorrichtung (6, 7) auf ungewöhnliche Abnutzung, und
das Prüfen der angetriebenen Walze (48) auf eine Sichelform von einer äußeren Nut der angetriebenen Walze, indem ein distales Ende des Einführrohrs durch die Klemmvorrichtungen (6, 7) des Klemmmechanismus geschoben wird, wobei
das Kabel (5) vom Gehäuse (13) vor der Einführung des Einführrohrs entfernt wird.

2. Verfahren zur Prüfung nach Anspruch 1, wobei der zentrifugale Erkennungsmechanismus eine Druckwalze (50) umfasst, um das Kabel (5) und die angetriebenen Walze (48) in Kontakt miteinander zu bringen, und wobei das Verfahren das Prüfen der Druckwalze (50) auf eine Sichelform von einer äußeren Nut der Druckwalze (50) umfasst.

3. Verfahren nach Anspruch 2, wobei das Prüfen der Druckwalze (50) das Schieben von einem distalen Ende des Einführrohrs durch die Klemmvorrichtungen (6, 7) des Klemmmechanismus umfasst.

## Revendications

1. Procédé de contrôle d'un dispositif de sécurité (10) monté sur un ascenseur de service, le dispositif de sécurité comprenant un boîtier (13), un trou d'entrée (12) pour un câble (5) et un trou de sortie (14) pour le câble, et un mécanisme de sécurité dans le boîtier,
le mécanisme de sécurité étant configuré pour empêcher que le câble (5) qui passe à travers le dispositif de sécurité (10) se déplace lorsqu'une condition dangereuse est donnée et dans lequel
le mécanisme de sécurité comprend
un premier dispositif de serrage (6) et un second dispositif de serrage (7) pour serrer le câble (5) entre les dispositifs de serrage premier et second (6, 7) et
un mécanisme de détection centrifuge, le mécanisme de détection centrifuge comprenant un rouleau actionné (48), et
le procédé comprenant
contrôler le mécanisme de sécurité en utilisant un endoscope en insérant un tube d'insertion de l'endoscope à travers le trou d'entrée du câble ou à travers le trou de sortie du câble, et
contrôler les dispositifs de serrage premier et second (6, 7) au regard d'une usure inusuelle, et
contrôler le rouleau actionné (48) au regard d'une forme de croissant d'une rainure extérieure du rouleau actionné en poussant une extrémité distale du tube d'insertion à travers les dispositifs de serrage (6, 7) du mécanisme de serrage, dans lequel
le câble (5) est enlevé du boîtier (13) avant d'insérer le tube d'insertion.

2. Procédé de contrôle selon la revendication 1, dans lequel le mécanisme de détection centrifuge comprend un rouleau de pression (50) pour faire que le câble (5) et le rouleau actionné (48) viennent en contact l'un avec l'autre, et le procédé comprenant contrôler le rouleau de pression (50) au regarde d'une forme de croissant d'une rainure extérieure du rouleau de pression (50).

3. Procédé selon la revendication 2, dans lequel contrôler le rouleau de pression (50) comprend pousser une extrémité distale du tube d'insertion à travers les dispositifs de serrage (6, 7) du mécanisme de serrage.
